# EUROPEAN PATENT APPLICATION

(11) **EP 4 439 908 A2**
(43) Date of publication of application: **02.10.2024**
(21) Application number: 24166729.4
(22) Date of filing: 27.03.2024
(51) Int. Cl.: H02J 3/32, H01M 10/46, H01M 10/615, H02J 7/00

(54) **ENERGY STORAGE SYSTEM AND TEMPERATURE CONTROL METHOD FOR ENERGY STORAGE SYSTEM**

(30) Priority: 29.03.2023 CN 202310356417
(71) Applicant: Huawei Digital Power Technologies Co., Ltd., Futian District, Shenzhen, Guangdong 518043 (CN)
(72) Inventor: DANG, Qi, Shenzhen, 518043 (CN); CHEN, Fuwen, Shenzhen, 518043 (CN); HUANG, Chongyue, Shenzhen, 518043 (CN)
(74) Representative: Epping - Hermann - Fischer

(57) **Abstract**

This application provides an energy storage system and a temperature control method for an energy storage system. The method includes: comparing an output power of a photovoltaic module with a maximum chargeable power of a cell pack in the energy storage system; and enabling at least one heating module in response to that the output power of the photovoltaic module is greater than the maximum chargeable power of the cell pack in the energy storage system; or disabling all heating modules in response to that the output power of the photovoltaic module is less than or equal to the maximum chargeable power of the cell pack in the energy storage system. The heating module included in the energy storage system is in a one-to-one correspondence with the cell pack. Specifically, a surface temperature of the cell pack affects a charging capability of the cell pack. A heating occasion, heating duration, and a quantity of heating times of the cell pack are determined based on a value relationship between the output power of the photovoltaic module and the maximum chargeable power of the cell pack in the energy storage system. Heating is enabled when the heating is required, and the heating is disabled when the heating is not required. This can improve overall energy storage efficiency of the energy storage system.

## Description

### TECHNICAL FIELD

This application relates to the field of energy storage technologies, and more specifically, to an energy storage system and a temperature control method for an energy storage system.

### BACKGROUND

In an optical storage system, energy storage efficiency of an energy storage system is likely to be affected by a temperature of a cell. For example, when the temperature of the cell is high, the energy storage efficiency of the energy storage system is high, and when the temperature of the cell is low, the energy storage efficiency of the energy storage system is low. A manner of heating the cell of the energy storage system may be used to improve the energy storage efficiency of the energy storage system.

However, in the current manner of heating, the energy storage system is heated by using a constant power. This manner causes low overall energy storage efficiency of the energy storage system, and further causes a waste of an output power of a photovoltaic module. Therefore, how to improve the overall energy storage efficiency of the energy storage system is an urgent technical problem to be resolved currently.

### SUMMARY

This application provides an energy storage system and a temperature control method for an energy storage system, to improve overall energy storage efficiency of the energy storage system.

According to a first aspect, an energy storage system is provided. The energy storage system includes a battery pack and a controller, and the battery pack receives electric energy from a photovoltaic module through a direct current bus. The battery pack includes a cell pack and a heating module, where the heating module is in a one-to-one correspondence with the cell pack. The controller is configured to compare an output power of the photovoltaic module with a maximum chargeable power of the cell pack in the energy storage system. The controller is configured to enable at least one heating module in response to that the output power of the photovoltaic module is greater than the maximum chargeable power of the cell pack in the energy storage system. The controller is configured to disable all heating modules in response to that the output power of the photovoltaic module is less than or equal to the maximum chargeable power of the cell pack in the energy storage system.

Specifically, the maximum chargeable power of the cell pack in the energy storage system may be a sum of maximum chargeable powers corresponding to all cell packs included in the energy storage system. For example, if the energy storage system includes K cell packs, and each cell pack corresponds to a maximum chargeable power, a maximum chargeable power of the cell packs in the energy storage system is a sum of maximum chargeable powers corresponding to the K cell packs.

Specifically, in this application, a heating occasion, heating duration, and a quantity of heating times of the cell pack may be determined based on a value relationship between the output power of the photovoltaic module and the maximum chargeable power of the cell pack in the energy storage system. For example, when the output power of the photovoltaic module is greater than the maximum chargeable power of the cell pack in the energy storage system, heating on the cell pack is enabled; or when the output power of the photovoltaic module is less than or equal to the maximum chargeable power of the cell pack in the energy storage system, heating on the cell pack is disabled.

It may be understood that the heating duration and the quantity of heating times of the cell pack depend on the value relationship between the output power of the photovoltaic module and the maximum chargeable power of the cell pack in the energy storage system at any moment. For example, at a moment T1, when the output power of the photovoltaic module is greater than the maximum chargeable power of the cell pack in the energy storage system, heating on the cell pack is enabled. At a moment T2, when the output power of the photovoltaic module is less than or equal to the maximum chargeable power of the cell pack in the energy storage system, heating on the cell pack is disabled. Duration between the moment T1 and the moment T2 is the heating duration of the cell pack.

In this application, the heating occasion, heating duration, and the quantity of heating times of the cell pack can be optimized by determining values of the output power of the photovoltaic module and the maximum chargeable power of the cell pack in the energy storage system. For example, heating is enabled when the heating is required, and the heating is disabled when the heating is not required. The foregoing manner of heating can further avoid wasting the output power of the photovoltaic module.

In conclusion, the foregoing energy storage system is used, so that overall energy storage efficiency of the energy storage system can be improved in this application.

In a possible implementation, the controller is configured to: in response to that the output power of the photovoltaic module is greater than the maximum chargeable power of the cell pack in the energy storage system, use a part of the output power of the photovoltaic module to charge the energy storage system at the maximum chargeable power of the cell pack in the energy storage system, and use a remaining part of the output power of the photovoltaic module to supply power to the heating module; or the controller is configured to: in response to that the output power of the photovoltaic module is less than or equal to the maximum chargeable power of the cell pack in the energy storage system, use the output power of the photovoltaic module to charge the cell pack in the energy storage system. Specifically, when the output power of the photovoltaic module is greater than the maximum chargeable power of the cell pack in the energy storage system, in this application, the output power of the photovoltaic module can be fully used, to avoid wasting the output power of the photovoltaic module. For example, the maximum chargeable power of the cell pack in the energy storage system in the output power of the photovoltaic module is used to charge the cell pack in the energy storage system, and a remaining power of the output power of the photovoltaic module except the charging power is used to heat the heating module, to improve a charging capability of the cell pack. When the output power of the photovoltaic module is less than or equal to the maximum chargeable power of the cell pack in the energy storage system, all the output power of the photovoltaic module is used to charge the cell pack in the energy storage system. In this way, utilization of the output power of the photovoltaic module can be improved.

In conclusion, according to the foregoing solutions, utilization of the output power of the photovoltaic module can be improved in this application.

In a possible implementation, the controller is configured to: in response to that the output power of the photovoltaic module is greater than the maximum chargeable power of the cell pack in the energy storage system, enable, in ascending order of states of charge of batteries of the battery pack, a heating module corresponding to at least one battery pack.

Specifically, when it is determined that the output power of the photovoltaic module is greater than the maximum chargeable power of the cell pack in the energy storage system, in this application, a cell pack that needs to be first heated may be determined based on ascending order of states of charge (states of charge, SOC) of battery packs. This can improve a charging capability of a battery pack with a low SOC, so that the battery pack with a low SOC can store more electricity, and a cycle life of the battery pack with a low SOC can be improved.

In a possible implementation, the controller is configured to: in response to that the output power of the photovoltaic module is greater than a sum of the maximum chargeable power of the cell pack in the energy storage system and a heating power of the enabled heating module, transfer, to a power grid, a power of the output power of the photovoltaic module except powers for charging the cell pack in the energy storage system and supplying power to the heating module; or the controller is configured to reduce a voltage of the direct current bus in response to that the output power of the photovoltaic module is greater than a sum of the maximum chargeable power of the cell pack in the energy storage system and a heating power of the enabled heating module.

Specifically, the remaining power of the output power of the photovoltaic module except the powers used for charging and heating is transferred to the power grid, so that utilization of the output power of the photovoltaic module can be effectively improved. In this application, the output power of the photovoltaic module can be reduced by reducing the voltage of the direct current bus, to match the output power of the photovoltaic module, the maximum chargeable power of the cell pack in the energy storage system, and a maximum heating power of the heating module. This avoids wasting the output power of the photovoltaic module.

In a possible implementation, the controller includes a first controller and a second controller, the battery pack includes a first battery pack group and a second battery pack group, the first controller controls the first battery pack group, the first battery pack group includes M battery packs, the second controller controls the second battery pack group, the second battery pack group includes N battery packs, the first controller is connected to the second controller, and both M and N are positive integers. The first controller is configured to: in response to that the output power of the photovoltaic module is greater than the maximum chargeable power of the cell pack in the energy storage system, enable, in ascending order of SOCs of the M battery packs, the heating module corresponding to the at least one battery pack.

In this way, heating of the M battery packs controlled by a first controller can be preferentially ensured, to preferentially improve charging capabilities of the M battery packs.

In a possible implementation, the second controller is configured to: in response to that the output power of the photovoltaic module is greater than a sum of the maximum chargeable power of the cell pack in the energy storage system and heating powers of heating modules corresponding to the M battery packs, enable, in ascending order of SOCs of the N battery packs, the heating module corresponding to the at least one battery pack.

In this way, remaining battery packs can be heated.

In a possible implementation, the controller includes a first controller and a second controller, the battery pack includes a first battery pack group and a second battery pack group, the first controller controls the first battery pack group, the first battery pack group includes M battery packs, the second controller controls the second battery pack group, the second battery pack group includes N battery packs, the first controller is connected to the second controller, and both M and N are positive integers. The first controller or the second controller is configured to: in response to that the output power of the photovoltaic module is greater than the maximum chargeable power of the cell pack in the energy storage system, enable, in ascending order of SOCs of the M battery packs and the N battery packs, the heating module corresponding to the at least one battery pack.

In this way, overall heating duration can be reduced.

In a possible implementation, a charging rate of the cell pack in the energy storage system within a first temperature range is less than a charging rate of the cell pack in the energy storage system within a second temperature range, and a lowest temperature in the second temperature range is greater than or equal to a highest temperature in the first temperature range. In this setting, when the output power of the photovoltaic module is greater than the maximum chargeable power of the battery pack in the energy storage system, a charging rate of the battery pack may be increased to a larger charging rate by enabling the heating module. When the output power of the photovoltaic module is less than or equal to the maximum chargeable power of the battery pack in the energy storage system, the charging rate of the battery pack remains at a fixed value, to ensure full use of the output power of the photovoltaic module.

According to a second aspect, a temperature control method for an energy storage system is provided. The method includes: comparing an output power of a photovoltaic module with a maximum chargeable power of a cell pack in the energy storage system; and enabling at least one heating module in response to that the output power of the photovoltaic module is greater than the maximum chargeable power of the cell pack in the energy storage system; or disabling all heating modules in response to that the output power of the photovoltaic module is less than or equal to the maximum chargeable power of the cell pack in the energy storage system. The energy storage system further includes the heating module, and the heating module is in a one-to-one correspondence with the cell pack.

In this application, a heating occasion, heating duration, and a quantity of heating times of the cell pack can be optimized by determining a value relationship between the output power of the photovoltaic module and the maximum chargeable power of the cell pack in the energy storage system. For example, heating is enabled when the heating is required, and the heating is disabled when the heating is not required. The foregoing manner of heating can further avoid wasting the output power of the photovoltaic module.

In conclusion, according to the foregoing technical solutions, overall energy storage efficiency of the energy storage system can be improved in this application.

In a possible implementation, the method further includes: in response to that the output power of the photovoltaic module is greater than maximum chargeable power of the cell pack in the energy storage system, using the output power of the photovoltaic module to charge the cell pack in the energy storage system at the maximum chargeable power of the cell pack in the energy storage system and supply power to the heating module; or in response to that the output power of the photovoltaic module is less than or equal to the maximum chargeable power of the cell pack in the energy storage system, using all the output power of the photovoltaic module to charge the cell pack in the energy storage system.

According to the foregoing solution, in this application, utilization of the output power of the photovoltaic module can be improved.

In a possible implementation, the method further includes: in response to that the output power of the photovoltaic module is greater than the maximum chargeable power of the cell pack in the energy storage system, enabling, in ascending order of SOCs of the battery pack, a heating module corresponding to at least one battery pack. The energy storage system further includes the battery pack, and the battery pack includes the cell pack and the heating module. Specifically, when it is determined that the output power of the photovoltaic module is greater than the maximum chargeable power of the cell pack in the energy storage system, in this application, a cell pack that needs to be first heated may be determined based on ascending order of SOCs of battery packs. This can improve a charging capability of a battery pack with a low SOC, so that the battery pack with a low SOC can store more electricity, and a cycle life of the battery pack with a low SOC can be improved.

In a possible implementation, the method further includes: in response to that the output power of the photovoltaic module is greater than a sum of the maximum chargeable power of the cell pack in the energy storage system and a heating power of the enabled heating module, transferring, to a power grid, a power of the output power of the photovoltaic module except powers for charging the cell pack in the energy storage system and supplying power to the heating module; or reducing a voltage of a direct current bus in response to that the output power of the photovoltaic module is greater than a sum of the maximum chargeable power of the cell pack in the energy storage system and a heating power of the enabled heating module. The battery pack receives electric energy from the photovoltaic module through the direct current bus.

In a possible implementation, the battery pack includes a first battery pack group and a second battery pack group, the first battery pack group includes M battery packs, the second battery pack group includes N battery packs, and both M and N are positive integers. The method further includes: in response to that the output power of the photovoltaic module is greater than the maximum chargeable power of the cell pack in the energy storage system, enabling, in ascending order of SOCs of the M battery packs, the heating module corresponding to the at least one battery pack. In a possible implementation, the method further includes: in response to that the output power of the photovoltaic module is greater than a sum of the maximum chargeable power of the cell pack in the energy storage system and heating powers of heating modules corresponding to the M battery packs, enabling, in ascending order of SOCs of the N battery packs, the heating module corresponding to the at least one battery pack.

In a possible implementation, the battery pack includes a first battery pack group and a second battery pack group, the first battery pack group includes M battery packs, the second battery pack group includes N battery packs, and both M and N are positive integers. The method further includes: in response to that the output power of the photovoltaic module is greater than the maximum chargeable power of the cell pack in the energy storage system, enabling, in ascending order of SOCs of the M battery packs and the N battery packs, the heating module corresponding to the at least one battery pack.

According to a third aspect, an optical storage system is provided. The optical storage system includes a power converter and the energy storage system according to the first aspect or any possible implementation of the first aspect. The energy storage system is connected to the power converter through a direct current bus. The power converter is configured to: convert a direct current from a photovoltaic module or the energy storage system into an alternating current, and transfer the alternating current to a power grid or a load.

For description of beneficial effects of the second aspect and the third aspect, refer to the description of beneficial effects of the first aspect. Details are not described herein again.

### BRIEF DESCRIPTION OF DRAWINGS

FIG. 1 is a schematic diagram of an architecture of an optical storage system 100 according to an embodiment of this application;
FIG. 2 is a schematic diagram of an application scenario 200 according to an embodiment of this application;
FIG. 3 is a schematic diagram of an architecture of an energy storage system 300 according to an embodiment of this application;
FIG. 4 is a flowchart of a temperature control method 400 for an energy storage system according to an embodiment of this application;
FIG. 5 is a schematic diagram of an architecture of an energy storage system 500 according to an embodiment of this application; and
FIG. 6 is a diagram of a relationship between a temperature of a cell and a charging capability according to an embodiment of this application.

### DESCRIPTION OF EMBODIMENTS

The following describes technical solutions in this application with reference to the accompanying drawings.

As modern industry develops, people's desire for energy is endless. As a member of renewable energy, solar energy is widely popular because of excellent characteristics such as universality, harmlessness, hugeness, and permanence.

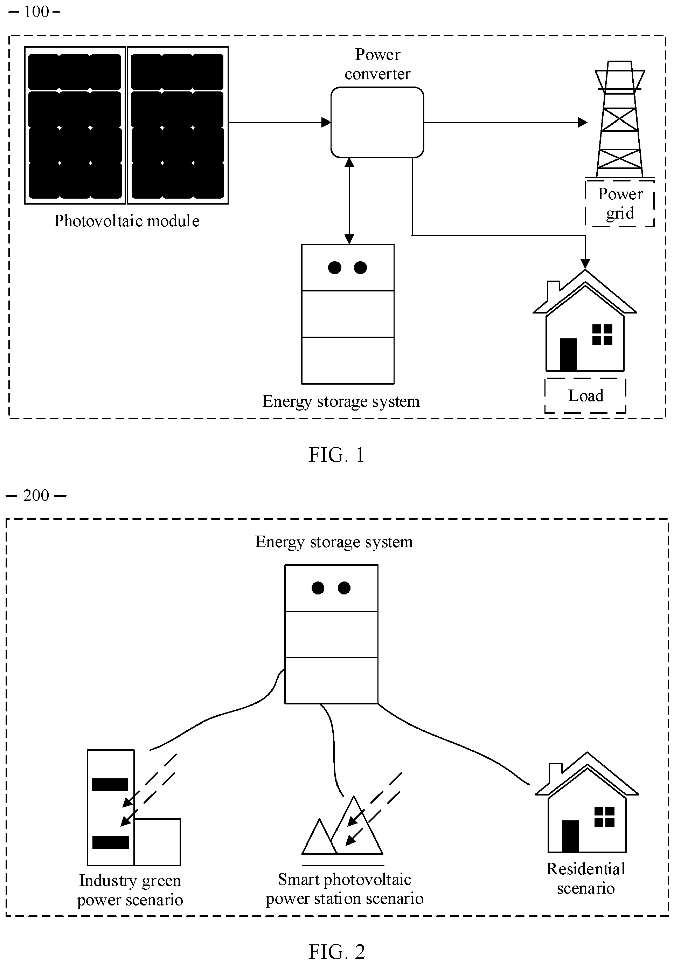

A photovoltaic module is a common way for people to use the solar energy. By using the photovoltaic module, people can convert the solar energy into electric energy, to meet our electricity consumption requirements. To effectively store the electric energy output by the photovoltaic module, an optical storage system is designed. For details, refer to FIG. 1.

FIG. 1 is a schematic diagram of an optical storage system 100 according to an embodiment of this application. As shown in FIG. 1, apparatuses in the optical storage system 100 include a photovoltaic module, a power converter, and an energy storage system.

Optionally, the optical storage system 100 may further include a power grid and a load.

Specifically, the power converter can convert a direct current from the photovoltaic module into an alternating current, and transfer the alternating current to the power grid or the load. The power converter can transfer the direct current from the photovoltaic module to the energy storage system, to facilitate charging of the energy storage system. The power converter can convert a direct current from the energy storage system into an alternating current, and transfers the alternating current to the power grid or the load. The power converter can convert an alternating current from the power grid into a direct current, and transfer the direct current to the energy storage system, to facilitate charging of the energy storage system.

It may be understood that when the optical storage system 100 includes the photovoltaic module, the power converter, and the energy storage system, the power converter is mainly configured to connect the photovoltaic module to the energy storage system, to facilitate charging of the energy storage system. When the optical storage system 100 includes the photovoltaic module, the power converter, the energy storage system, the power grid, and the load, the power converter can be configured to connect the foregoing apparatuses. For example, the power converter connects the photovoltaic module to the energy storage system; the power converter connects the photovoltaic module to the power grid; the power converter connects the photovoltaic module to the load; the power converter connects the power grid to the energy storage system; and the power converter connects the load to the energy storage system.

It may be understood that the power converter may include an inverter, or may include a rectifier, or may include both. When the power converter is an inverter, the power converter is configured to convert a direct current into an alternating current. When the power converter is a rectifier, the power converter is configured to convert an alternating current into a direct current. It may be understood that the inverter and the rectifier may be integrated into one device. The energy storage system in the optical storage system 100 can implement storage and release of electric energy. For example, the energy storage system may store direct current energy from the photovoltaic module, the energy storage system may store direct current energy obtained by converting alternating current energy from the power grid by the power converter, and the energy storage system may further supply power to the load and transmit the alternating current energy to the power grid by using the power converter. Therefore, application scenarios of the energy storage system are wide. For details, refer to FIG. 2.

FIG. 2 is a schematic diagram of an application scenario 200 according to an embodiment of this application. As shown in FIG. 2, the application scenario 200 includes but is not limited to a residential scenario, an industry green power scenario, a smart photovoltaic power station scenario, and the like. In an example, when the energy storage system is applied to a residential scenario, the energy storage system is mainly used as a backup power supply, so that a user can conveniently adjust a peak-valley electricity price. For example, in a low-price period, the energy storage system is charged, and in a high-price period, the energy storage system is discharged. In this way, household power consumption costs can be reduced.

In the optical storage system 100, energy storage efficiency (or charging efficiency) of the energy storage system is affected by a temperature of a cell. For example, when the temperature of the cell is high, the energy storage efficiency of the energy storage system is high, and when the temperature of the cell is low, the energy storage efficiency of the energy storage system is low. To improve the energy storage efficiency of the energy storage system, it is currently proposed that the cell of the energy storage system may be heated, so that the temperature of the cell is within an appropriate temperature range.

Specifically, when it is detected that the temperature of the cell of the energy storage system is below a chargeable temperature (the energy storage system below this temperature does not have a charging capability), the cell of the energy storage system is heated, and heating is stopped after the cell reaches a specific temperature, so that the energy storage system can store additional electric energy in an output power of the photovoltaic module except electric energy meeting the power grid and the load.

However, the foregoing manner of heating makes overall energy storage efficiency of the energy storage system not high. For example, when it is detected that the temperature of the cell of the energy storage system is -3°C, the energy storage system is heated by using a constant power, and when the temperature of the cell of the energy storage system reaches 12°C, heating is stopped. During the heating, the energy storage system has a charging capability (for example, when the temperature of the cell is 2°C, the energy storage system can perform charging), but the energy storage system does not perform charging. This affects overall energy storage efficiency of the energy storage system, and further wastes an output power of the photovoltaic module.

In view of the foregoing technical problem, this application provides an energy storage system and a temperature control method, to improve overall energy storage efficiency of the energy storage system.

The following describes the energy storage system and the temperature control method in this embodiment of this application with reference to the accompanying drawings.

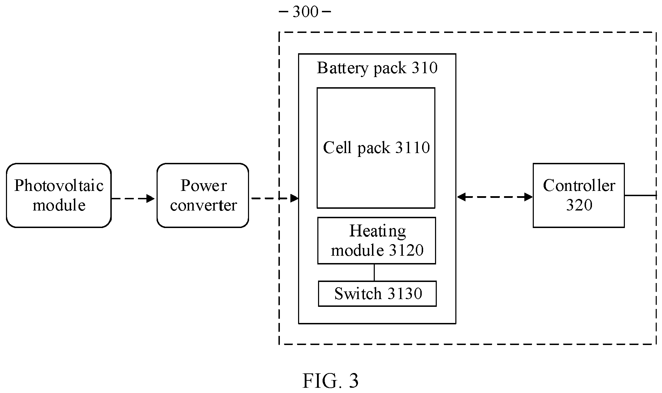

FIG. 3 is a schematic diagram of an architecture of an energy storage system 300 according to an embodiment of this application. As shown in FIG. 3, the energy storage system 300 includes a battery pack 310 and a controller 320. The battery pack 310 includes a cell pack 3110, a heating module 3120, and a switch 3130. The heating module 3120 is in a one-to-one correspondence with the cell pack 3110, and is configured to heat the cell pack 3110. The switch 3130 is connected to the heating module 3120 in series. The controller 320 controls the switch 3130 to be turn on or turn off, to enable or disable the heating module 3120.

It may be understood that the energy storage system 300 includes at least one battery pack 310, and each battery pack 310 includes at least one cell pack 3110 and at least one heating module 3120. For ease of description, this embodiment of this application is described by using an example in which the energy storage system 300 includes one battery pack 310, and the battery pack 310 includes one cell pack 3110, one heating module 3120, and a controller 320. A scenario in which more battery packs 310, cell packs 3110, and heating modules 3120 are used is not limited. The controller 320 can control the battery pack 310 (including the cell pack 3110 and the heating module 3120), and the battery pack 310 is configured to store electric energy.

Specifically, when the energy storage system 300 includes one battery pack 310, a maximum chargeable power of the energy storage system 300 is a charging power corresponding to the battery pack 310. When the energy storage system 300 includes at least two battery packs 310, a maximum chargeable power of the energy storage system 300 is a sum of charging powers respectively corresponding to the at least two battery packs 310.

Specifically, the maximum chargeable power of the energy storage system 300 may also be a sum of maximum chargeable powers corresponding to each of the cell packs 3110 included in the energy storage system 300. For example, the energy storage system 300 includes K cell packs 3110, and each cell pack 3110 corresponds to a maximum chargeable power. Therefore, a maximum chargeable power of cell packs 3110 in the energy storage system 300 is a sum of maximum chargeable powers corresponding to the K cell packs 3110.

It may be understood that the charging power of the battery pack 310 is affected by a temperature of the cell pack 3110. Within a specific temperature range, as the temperature of the cell pack 3110 increases, the charging power of the battery pack 310 increases accordingly. Therefore, the heating module 3120 of the battery pack 310 is enabled, so that the charging power of the battery pack 310 can be increased. For details, refer to the following description. Details are not described herein again.

Specifically, the battery pack 310 is connected to a photovoltaic module through a direct current bus, that is, the battery pack 310 receives electric energy from the photovoltaic module through the direct current bus. The direct current bus is a component of a power converter. In other words, the energy storage system 300 is connected to the photovoltaic module through the power converter.

In a possible implementation, the battery pack 310 may further receive, through the direct current bus of the power converter, electric energy output by a wind power generation system or a hydroelectric power generation system, or the like.

It may be understood that the battery pack 310 may further receive, through the direct current bus of the power converter, electric energy output by another power system (for example, a wind power generation system and a hydroelectric power generation system). This is not limited herein. For ease of description, in this embodiment of this application, an example in which the battery pack 310 receives electric energy from the photovoltaic module through a direct current bus is used for description, and another possible scenario is not limited.

In a possible implementation, the heating module 3120 may be a heating film attached to a surface of the cell pack 3110, to heat the battery pack 310.

Optionally, the heating module 3120 may be another device or material having a heating function. This is not limited herein.

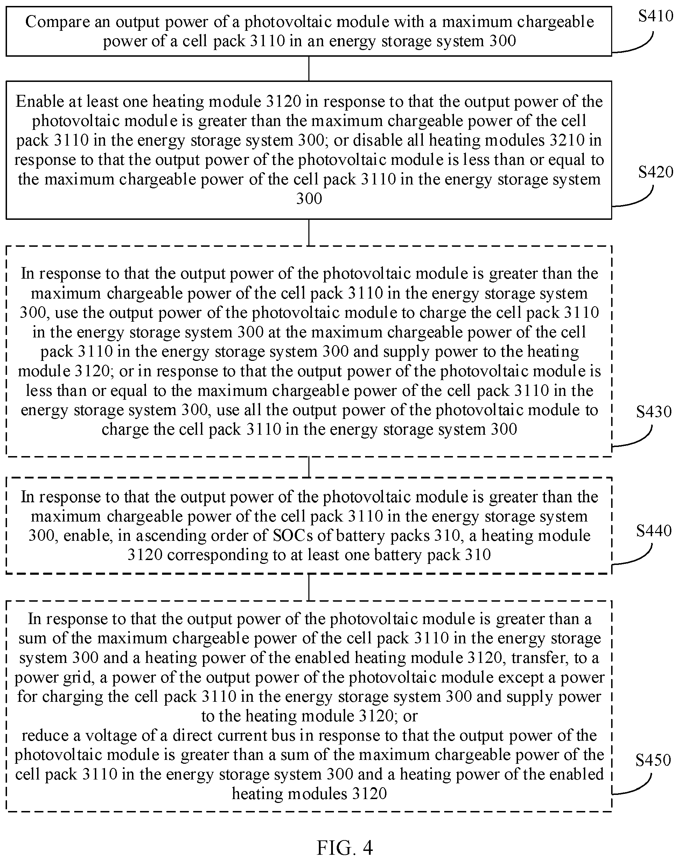

FIG. 4 is a flowchart of a temperature control method 400 for an energy storage system according to an embodiment of this application. The method in FIG. 4 may be performed by the controller 320 in the energy storage system 300. As shown in FIG. 4, the method 400 includes the following steps.

S410: Compare an output power of a photovoltaic module with a maximum chargeable power of the cell pack 3110 in the energy storage system 300.

Specifically, the output power of the photovoltaic module and the maximum chargeable power of the cell pack 3110 in the energy storage system 300 are changeable at any moment. In an example, the output power of the photovoltaic module at a moment T1 and the output power of the photovoltaic module at a moment T2 may be different values. Similarly, the maximum chargeable power of the cell pack 3110 in the energy storage system 300 at the moment T1 may be different from the maximum chargeable power of the cell pack 3110 in the energy storage system 300 at the moment T2. Therefore, the output power of the photovoltaic module and the maximum chargeable power of the cell pack 3110 in the energy storage system 300 may be different at any moment.

For example, the moment T1 is 7:30, the output power of the photovoltaic module is 600 W, and the maximum chargeable power of the cell pack 3110 in the energy storage system 300 is 300 W. The output power of the photovoltaic module is greater than the maximum chargeable power of the cell pack 3110 in the energy storage system 300. The moment T2 is 9:00, the output power of the photovoltaic module is 1200 W, and the maximum chargeable power of the cell pack 3110 in the energy storage system 300 is 2000 W. The output power of the photovoltaic module is less than the maximum chargeable power of the cell pack 3110 in the energy storage system 300.

S420: Enable at least one heating module 3120 in response to that the output power of the photovoltaic module is greater than the maximum chargeable power of the cell pack 3110 in the energy storage system 300; or disable all heating modules 3120 in response to that the output power of the photovoltaic module is less than or equal to the maximum chargeable power of the cell pack 3110 in the energy storage system 300.

In an example, the energy storage system 300 includes one battery pack 310, and the battery pack 310 includes at least one cell pack 3110 and at least one heating module 3120. When it is determined that an output power of the photovoltaic module is greater than a maximum chargeable power of the cell pack 3110 in the energy storage system 300 (corresponding to a maximum chargeable power of one battery pack 310, or corresponding to a maximum chargeable power of the cell pack 3110 in the battery pack 310), the at least one heating module 3120 is enabled, that is, the at least one cell pack 3110 in the battery pack 310 is heated; or when it is determined that the output power of the photovoltaic module is less than or equal to the maximum chargeable power of the cell pack 3110 in the energy storage system 300, all heating modules 3120 are disabled, that is, heating of the cell pack 3110 is stopped.

In another example, the energy storage system 300 includes two battery packs 310, and each battery pack 310 includes one cell pack 3110 and one heating module 3120. When it is determined that an output power of the photovoltaic module is greater than a maximum chargeable power of the cell pack 3110 in the energy storage system 300 (corresponding to a sum of maximum chargeable powers of the two battery packs 310, or corresponding to a sum of maximum chargeable powers of all cell packs 3110 in the two battery packs 310), at least one heating module 3120 is enabled (when one heating module 3120 is enabled, the heating module 3120 may be a heating module 3120 of a first battery pack 310, or may be a heating module 3120 of a second battery pack 310; or when two heating modules 3120 are enabled, the two heating modules 3120 include a heating module 3120 of a first battery pack 310 and a heating module 3120 of a second battery pack 310), that is, the cell pack 3110 of at least one battery pack 310 is heated. When it is determined that the output power of the photovoltaic module is less than or equal to the maximum chargeable power of the cell pack 3110 in the energy storage system 300, all heating modules 3120 are disabled, that is, heating of the cell pack 3110 is stopped.

It may be understood that each battery pack 310 may include at least two cell packs 3110 and at least two heating modules 3120. Therefore, the at least one heating module 3120 in the foregoing "at least one heating module 3120 is enabled" may be from a same battery pack 310, or may be from a plurality of battery packs 310. This is not limited herein.

With reference to the foregoing description of the moment T1 and the moment T2, it can be learned that, a value relationship between the output power of the photovoltaic module and the maximum chargeable power of the cell pack 3110 in the energy storage system 300 meets the following condition at the moment T 1: When the output power of the photovoltaic module is greater than the maximum chargeable power of the cell pack 3110 in the energy storage system 300, the at least one heating module 3120 is enabled; and a value relationship between the output power of the photovoltaic module and the maximum chargeable power of the cell pack 3110 in the energy storage system 300 meets the following condition at the moment T2: When the output power of the photovoltaic module is less than or equal to the maximum chargeable power of the cell pack 3110 in the energy storage system 300, all heating modules 3120 are disabled.

In conclusion, a heating occasion, heating duration, and a quantity of heating times of the cell pack 3110 depend on a value relationship between the output power of the photovoltaic module and the maximum chargeable power of the cell pack 3110 in the energy storage system 300 at any moment. To be specific, when the output power of the photovoltaic module is greater than the maximum chargeable power of the cell pack 3110 in the energy storage system 300, heating is enabled; or when the output power of the photovoltaic module is less than or equal to the maximum chargeable power of the cell pack 3110 in the energy storage system 300, heating is disabled.

It may be understood that the maximum chargeable power of the cell pack 3110 refers to a maximum charging power of the cell pack 3110 at a specific temperature. During actual charging, the cell pack 3110 may not perform charging at the maximum charging power. This is further described in the following, and is not further described herein. Further, the heating duration and the quantity of heating times of the cell pack 3110 depend on a value relationship between the maximum chargeable power of the cell pack 3110 in the energy storage system 300 and the output power of the photovoltaic module. For example, when the output power of the photovoltaic module is greater than the maximum chargeable power of the cell pack 3110 in the energy storage system 300, heating is enabled; or when the output power of the photovoltaic module is less than or equal to the maximum chargeable power of the cell pack 3110 in the energy storage system 300, heating is disabled.

It may be understood that the heating duration and the quantity of heating times of the cell pack 3110 depend on the value relationship between the output power of the photovoltaic module and the maximum chargeable power of the cell pack 3110 in the energy storage system 300 at any moment. In this application, the heating occasion, heating duration, and a quantity of heating times of the cell pack 3110 can be optimized by determining the value relationship between the output power of the photovoltaic module and the maximum chargeable power of the cell pack 3110 in the energy storage system 300. For example, heating is enabled when the heating is required, and the heating is disabled when the heating is not required. The foregoing manner of heating can further avoid wasting the output power of the photovoltaic module.

It should be noted that the foregoing S410 and S420 are applicable to a scenario in which the energy storage system 300 includes one battery pack 310, and the battery pack 310 includes one cell pack 3110 and one heating module 3120, applicable to a scenario in which the energy storage system 300 includes one battery pack 310, and the battery pack 310 includes at least two cell packs 3110 and at least two heating modules 3120, applicable to a scenario in which the energy storage system 300 includes at least two battery packs 310, and each battery pack 310 includes one cell pack 3110 and one heating module 3120, and further applicable to a scenario in which the energy storage system 300 includes at least two battery packs 310, and each battery pack 310 includes at least two cell packs 3110 and at least two heating modules 3120.

In conclusion, the foregoing energy storage system is used, so that overall energy storage efficiency of the energy storage system can be improved in this application.

In a possible implementation, the method 400 may further include the following step.

S430: In response to that the output power of the photovoltaic module is greater than the maximum chargeable power of the cell pack 3110 in the energy storage system 300, use the output power of the photovoltaic module to charge the cell pack 3110 in the energy storage system 300 at the maximum chargeable power of the cell pack 3110 in the energy storage system 300 and supply power to the heating module 3120; or in response to that the output power of the photovoltaic module is less than or equal to the maximum chargeable power of the cell pack 3110 in the energy storage system 300, use all the output power of the photovoltaic module to charge the cell pack 3110 in the energy storage system 300.

Specifically, when it is determined that the output power of the photovoltaic module is greater than the maximum chargeable power of the cell pack 3110 in the energy storage system 300, the output power of the photovoltaic module is used to charge the cell pack 3110 in the energy storage system 300 at the maximum chargeable power of the cell pack 3110 in the energy storage system 300 and supply power to the heating module 3120. In an example, the output power of the photovoltaic module is 2000 W, the maximum chargeable power of the cell pack 3110 in the energy storage system 300 is 1800 W, 1800 W of the output power 2000 W of the photovoltaic module is used to charge the cell pack 3110 in the energy storage system 300, and 200 W of the output power 2000 W of the photovoltaic module is used to supply power to the heating module 3120 (it is assumed that a heating power of the heating module 3120 is 200 W).

Specifically, when it is determined that the output power of the photovoltaic module is less than or equal to the maximum chargeable power of the cell pack 3110 in the energy storage system 300, all the output power of the photovoltaic module is used to charge the cell pack 3110 in the energy storage system 300. In an example, the output power of the photovoltaic module is 2000 W, the maximum chargeable power of the cell pack 3110 in the energy storage system 300 is 2400 W, and all the output power 2000 W of the photovoltaic module is used to charge the cell pack 3110 in the energy storage system 300.

In a possible implementation, when a difference between the output power of the photovoltaic module and the maximum chargeable power of the cell pack 3110 in the energy storage system 300 is insufficient to enable one heating module 3120, this application supports enabling of one heating module 3120 by obtaining a power from a power grid. For example, if the output power of the photovoltaic module is 2000 W, a heating power of one heating module 3120 is 300 W, and the maximum chargeable power of the cell pack 3110 in the energy storage system 300 is 1800 W, when the heating module 3120 is heated, an actual charging power of the cell pack 3110 is 1800 W, and 100 W is obtained from a power grid. In this way, the output power of the photovoltaic module can be fully used, and the cell pack 3110 may be charged according to the maximum chargeable power.

In a possible implementation, when the output power of the photovoltaic module is greater than the maximum chargeable power of the cell pack 3110 in the energy storage system 300, and a difference between the output power of the photovoltaic module and the maximum chargeable power of the cell pack 3110 is insufficient to enable one heating module 3120, this application supports adjustment of an actual charging power of the cell pack 3110 in the energy storage system 300. For example, if the output power of the photovoltaic module is 2000 W, a heating power of one heating module 3120 is 300 W, and the maximum chargeable power of the cell pack 3110 in the energy storage system 300 is 1800 W, when heating is enabled for the heating module 3120, an actual charging power of the cell pack 3110 in the energy storage system 300 is 1700 W. In this way, the output power of the photovoltaic module can be fully used.

Specifically, when the output power of the photovoltaic module is greater than the maximum chargeable power of the cell pack 3110 in the energy storage system 300, in this application, the output power of the photovoltaic module can be fully used, to avoid wasting the output power of the photovoltaic module. For example, the maximum chargeable power of the cell pack 3110 in the energy storage system 300 in the output power of the photovoltaic module is used to charge the cell pack 3110 in the energy storage system 300, and a remaining power of the output power of the photovoltaic module except the charging power is used to heat the heating module 3120, to improve a charging capability of the cell pack 3110. When the output power of the photovoltaic module is less than or equal to the maximum chargeable power of the cell pack 3110 in the energy storage system 300, all the output power of the photovoltaic module is used to charge the cell pack 3110 in the energy storage system 300. In this way, utilization of the output power of the photovoltaic module can be improved.

In a possible implementation, when the output power of the photovoltaic module is greater than the maximum chargeable power of the cell pack 3110 in the energy storage system 300, the output power of the photovoltaic module is used to charge the cell pack 3110 in the energy storage system 300 and supply power to the heating module 3120. An actual charging power of the cell pack 3110 in the energy storage system 300 may be less than or equal to the maximum chargeable power of the cell pack 3110 in the energy storage system 300. In addition, when the output power of the photovoltaic module is insufficient to support enabling of a plurality of heating modules 3120, this application supports two manners: adjusting the actual charging power of the cell pack 3110 in the energy storage system 300 or obtaining a power from a power grid.

In conclusion, according to the foregoing solutions, utilization of the output power of the photovoltaic module can be improved in this application.

It should be noted that, in S430, a quantity of battery packs 310 of the energy storage system 300 is not limited in this embodiment of this application, and a quantity of heating modules 3120 and a quantity of cell packs 3110 are not limited. When it is determined that the output power of the photovoltaic module is greater than the maximum chargeable power of the cell pack 3110 in the energy storage system 300, charging and heating may be performed according to the solution in S430 in this application.

In a possible implementation, the method 400 may further include the following step.

S440: In response to that the output power of the photovoltaic module is greater than the maximum chargeable power of the cell pack 3110 in the energy storage system 300, enable, in ascending order of SOCs of battery packs, a heating module 3120 corresponding to at least one battery pack 310.

Specifically, when the energy storage system 300 includes the at least one battery pack 310, and the energy storage system 300 needs to be heated, in this application, the heating module 3120 corresponding to the at least one battery pack 310 can be enabled in the ascending order of SOCs of the battery pack 310.

For example, the energy storage system 300 includes three battery packs 310, an SOC of a first battery pack 310 is 20%, an SOC of a second battery pack 310 is 40%, and an SOC of a third battery pack 310 is 70%. When heating is enabled, this application supports a case in which the first battery pack 310 is first heated, that is, the heating module 3120 in the first battery pack 310 is first enabled. When there is still a sufficient remaining power to support the heating, this application supports continuous heating in a sequence of the second battery pack 310 and the third battery pack 310.

Specifically, when it is determined that the output power of the photovoltaic module is greater than the maximum chargeable power of the cell pack 3110 in the energy storage system 300, in this application, a cell pack 3110 that needs to be first heated may be determined based on ascending order of SOCs of battery packs 310. This can improve a charging capability of a battery pack 310 with a low SOC, so that the battery pack with a low SOC can store more electricity, and a cycle life of the battery pack 310 with a low SOC can be improved.

It should be noted that, in S440, a quantity of battery packs 310 of the energy storage system 300 is not limited in this embodiment of this application, and a quantity of heating modules 3120 and a quantity of cell packs 3110 are not limited. When heating modules 3120 corresponding to the at least one battery pack 310 are sequentially enabled, and each battery pack 310 includes at least two heating modules 3120, this application supports enabling of some or all of the heating modules 3120 in the battery pack 310.

In a possible implementation, the method 400 may further include the following step.

S450: In response to that the output power of the photovoltaic module is greater than a sum of the maximum chargeable power of the cell pack 3110 in the energy storage system 300 and a heating power of the enabled heating module 3120, transfer, to the power grid, a power of the output power of the photovoltaic module except powers for charging the cell pack 3110 in the energy storage system 300 and supplying power to the heating module 3120; or reduce a voltage of a direct current bus in response to that the output power of the photovoltaic module is greater than a sum of the maximum chargeable power of the cell pack 3110 in the energy storage system 300 and a heating power of the enabled heating module 3120.

For example, the output power of the photovoltaic module is 5000 W, the maximum chargeable power of the cell pack 3110 in the energy storage system 300 is 3500 W, and a maximum heating power of the heating module 3120 in the energy storage system 300 is 1200 W (which is a sum of heating powers of enabled heating modules 3120). This application supports transmission of the remaining 300 W to the power grid. Alternatively, this application supports adjustment of the voltage of the direct current bus, to reduce the output power of the photovoltaic module, and match the maximum chargeable power of the cell pack 3110 in the energy storage system 300 and the maximum heating power of the heating module 3120.

The remaining power of the output power of the photovoltaic module except the powers used for charging and heating is transferred to the power grid, so that utilization of the output power of the photovoltaic module can be effectively improved. In this application, the output power of the photovoltaic module can be reduced by reducing the voltage of the direct current bus, to match the output power of the photovoltaic module, the maximum chargeable power of the cell pack 3110 in the energy storage system 300, and the maximum heating power of the heating module 3120. This avoids wasting the output power of the photovoltaic module.

It should be noted that an execution sequence of S430 to S450 is not limited in this embodiment of this application. The following further describes the energy storage system in this embodiment of this application with reference to another accompanying drawing.

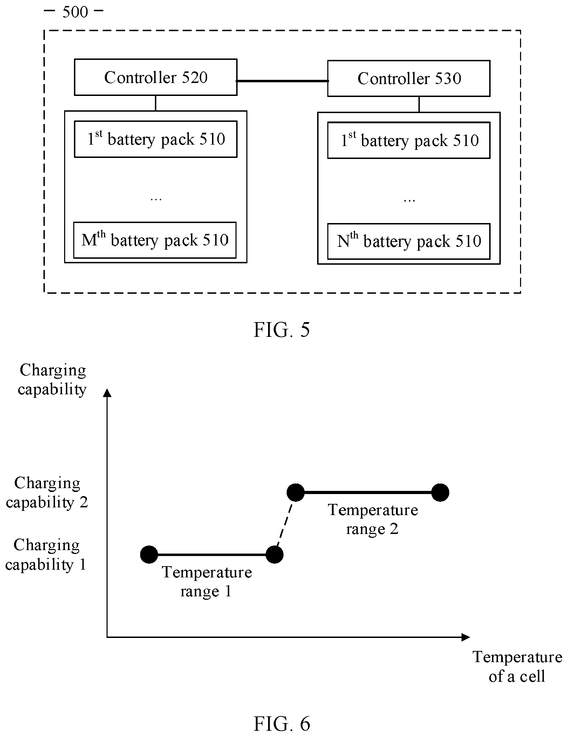

FIG. 5 is a schematic diagram of an architecture of an energy storage system 500 according to an embodiment of this application. As shown in FIG. 5, the energy storage system 500 includes a first battery pack group, a second battery pack group, a controller 520 (which may be the foregoing controller 320), and a controller 530 (which may be the foregoing controller 320). The first battery pack group includes M battery packs 510, the second battery pack group includes N battery packs 510, and both M and N are positive integers. The battery pack 510 includes a cell pack 5110 and a heating module 5120. For description of the battery pack 510, refer to the description of the battery pack 310. Details are not described herein again. The controller 520 controls the M battery packs 510, and the controller 530 controls the N battery packs 510. The controller 520 is connected to the controller 530.

Specifically, when both the controller 520 and the controller 530 are in a working state, this application supports a case in which the controller 520 first heats the M battery packs 510, and then the controller 530 heats the N battery packs 510 by using a remaining power.

In a possible implementation, in response to that an output power of a photovoltaic module is greater than a maximum chargeable power (corresponding to a sum of maximum chargeable powers of cell packs 5110 in M+N battery packs 510) of the cell pack 5110 in the energy storage system 500, the controller 520 enables, in ascending order of SOCs of the M battery packs, a heating module 5120 corresponding to at least one battery pack 510. In this way, heating of the M battery packs controlled by a first controller can be preferentially ensured, to preferentially improve charging capabilities of the M battery packs.

In a possible implementation, in response to that the output power of the photovoltaic module is greater than a sum of the maximum chargeable power of the cell pack 5110 in the energy storage system 500 and heating powers of heating modules 5120 corresponding to the M battery packs 510, the controller 530 enables, in ascending order of SOCs of the N battery packs, the heating module 5120 corresponding to at least one battery pack 510. In this way, remaining battery packs can be heated.

In an example, the output power of the photovoltaic module is 5000 W, the maximum chargeable power of the energy storage system 500 is 4000 W, and the controller 520 first uses 1000 W of 5000 W to heat the M battery packs 510. When there is a remaining power, the controller 530 uses the remaining power to heat the N battery packs 510. Specifically, when it is determined that heating needs to be performed, this application supports a case in which the controller 520 controls the M battery packs 510 to be first heated. This can ensure that charging capabilities of the M battery packs 510 controlled by the controller 520 are preferentially improved. If there is a remaining power, this application supports a case in which the controller 530 controls the N battery packs 510 to be heated, to avoid wasting the output power of the photovoltaic module.

Specifically, the controller 520 and the controller 530 may communicate with each other, to obtain SOCs of battery packs 510 controlled by each other. For example, the controller 520 obtains SOCs of the N battery packs 510 controlled by the controller 530, and the controller 530 obtains SOCs of the M battery packs 510 controlled by the controller 520. In a possible implementation, in response to that the output power of the photovoltaic module is greater than the maximum chargeable power of the cell pack 5110 in the energy storage system 500, the controller 520 or the controller 530 enables, in ascending order of SOCs of the M battery packs 510 and the N battery packs 510, the heating module 5120 corresponding to at least one battery pack 510.

In an example, the output power of the photovoltaic module is 5000 W, and the maximum chargeable power of the cell pack 5110 in the energy storage system 500 is 4000 W. The controller 520 or the controller 530 enables, by using 1000 W in ascending order of SOCs of the M battery packs 510 and the N battery packs 510, the heating module 5120 corresponding to at least one battery pack 510.

It should be noted that the foregoing controller 520 and controller 530 may also perform the foregoing method 400. The following further describes the method 400 with reference to FIG. 6.

FIG. 6 is a diagram of a relationship between a temperature of a cell and a charging capability according to an embodiment of this application. As shown in FIG. 6, when a temperature of a cell of a battery pack 1 (which may be the foregoing battery pack 310 or battery pack 510) is within a temperature range 1, a charging capability of the battery pack 1 is 1 (or a maximum chargeable power is 1), and when the temperature of the cell of the battery pack 1 is within a temperature range 2, the charging capability of the battery pack 1 is 2 (or a maximum chargeable power is 2). The temperature range 1 may be 2°C to 5°C, and the temperature range 2 may be 7°C to 10°C. It may be understood that as the temperature of the cell of the battery pack 1 increases, the charging capability of the battery pack 1 also increases accordingly. For details, refer to Table 1. A charging rate of the battery pack 1 (or a cell pack) within the temperature range 1 is less than a charging rate of the battery pack 1 (or a cell pack) within the temperature range 2, and a highest temperature in the temperature range 1 is less than or equal to a lowest temperature in the temperature range 2. In other words, the charging rate of the battery pack 1 (or a cell pack) increases sharply as a temperature increases.

The following further describes the method 400 with reference to Table 1 and Table 2. For ease of description, in this embodiment of this application, an example in which the energy storage system 300 includes a battery pack 1 and a battery pack 2, and each battery pack includes a cell pack and a heating module is used for description.

**Table 1**

| | | | | | | |
|---|---|---|---|---|---|---|
| Temperature of a cell/°C | 0 | 2 | 5 | 7 | 10 | ≥15 |
| Maximum chargeable power/W | 0 | 550 | 550 | 1850 | 1850 | 2500 |

**Table 2**

| | | | | | | | | | |
|---|---|---|---|---|---|---|---|---|---|
| Time | 7:00 | 7:30 | 8:00 | 8:30 | 9:00 | 9:30 | 10:00 | 10:30 | 11:00 |
| Temperature of a cell of a battery pack 1 | -3 | -3 | 2 | 3 | 7 | 8 | 9 | 10 | >12 |
| Temperature of a cell of a battery pack 2 | -3 | -3 | 2 | 3 | 4 | 5 | 6 | 8 | 10 |
| Output power | 0 | 600 | 600 | 1200 | 1500 | 2000 | 2500 | 3000 | 3500 |
| Heating power of a heating module 1 | 0 | 300 | 0 | 300 | 0 | 0 | 0 | 0 | 0 |
| Heating power of a heating module 2 | 0 | 300 | 0 | 0 | 0 | 0 | 300 | 0 | 0 |
| Charging power of the battery pack 1 | 0 | 0 | 300 | 450 | 950 | 1450 | 1650 | 1500 | 1750 |
| Charging power of the battery pack 2 | 0 | 0 | 300 | 450 | 550 | 550 | 550 | 1500 | 1750 |

It can be learned from Table 1 that charging capabilities of battery packs at different temperatures of cells are different. For example, when the temperature of the cell of the battery pack 1 (or the battery pack 2) is 0°C, a maximum chargeable power of the battery pack 1 (or the battery pack 2) is 0; when the temperature of the cell of the battery pack 1 (or the battery pack 2) is 2°C, the maximum chargeable power of the battery pack 1 (or the battery pack 2) is 550 W; when the temperature of the cell of the battery pack 1 (or the battery pack 2) is 5°C, the maximum chargeable power of the battery pack 1 (or the battery pack 2) is 550 W; when the temperature of the cell of the battery pack 1 is 7°C, the maximum chargeable power of the battery pack 1 (or the battery pack 2) is 1850 W; and when the temperature of the cell of the battery pack 1 (or the battery pack 2) is 15°C, the maximum chargeable power of the battery pack 1 (or the battery pack 2) is 2500 W. It can be further learned from Table 1 that, when the temperature of the cell of the battery pack 1 (or the battery pack 2) is 2°C to 5°C, maximum chargeable powers of the battery pack 1 (or the battery pack 2) are the same; and when the temperature of the cell of the battery pack 1 (or the battery pack 2) is 7°C to 10°C, maximum chargeable powers of the battery pack 1 (or the battery pack 2) are the same.

It can be learned from Table 2 that charging behaviors and heating behaviors of the battery pack 1 and the battery pack 2 may be different at different moments. For example,
when time is 7:00, temperatures of cells of the battery pack 1 and the battery pack 2 are both -3°C, and an output power of a photovoltaic module is 0 W. No processing is performed (a maximum chargeable power is 0 W).

When time is 7:30, the temperatures of cells of the battery pack 1 and the battery pack 2 are both -3°C, and the output power of the photovoltaic module is 600 W. Both the battery pack 1 and the battery pack 2 are heated (a maximum chargeable power is 0 W).

When time is 8:00, the temperatures of cells of the battery pack 1 and the battery pack 2 after heating are both 2°C, and the output power of the photovoltaic module is 600 W. Both the battery pack 1 and the battery pack 2 perform charging (a maximum chargeable power is 1100 W).

When time is 8:30, the temperatures of cells of the battery pack 1 and the battery pack 2 are both 3°C, and the output power of the photovoltaic module is 1200 W. The battery pack 1 is heated and performs charging, and the battery pack 2 performs charging (a maximum chargeable power is 1100 W, a difference between the output power of the photovoltaic module and the maximum chargeable power cannot support enabling of one heating module, and an actual charging power needs to be adjusted).

When time is 9:00, after heating, the temperature of the cell of the battery pack 1 is 7°C, the temperature of the cell of the battery pack 2 is 4°C, and the output power of the photovoltaic module is 1500 W. Both the battery pack 1 and the battery pack 2 perform charging (a maximum chargeable power is 2400 W).

When time is 9:30, the temperature of the cell of the battery pack 1 is 8°C, the temperature of the cell of the battery pack 2 is 5°C, and the output power of the photovoltaic module is 2000 W. Both the battery pack 1 and the battery pack 2 perform charging (a maximum chargeable power is 2400 W).

When time is 10:00, the temperature of the cell of the battery pack 1 is 9°C, the temperature of the cell of the battery pack 2 is 6°C, and the output power of the photovoltaic module is 2500 W. The battery pack 2 is heated and performs charging, and the battery pack 1 performs charging only (a maximum chargeable power is 2400 W, a difference between the output power of the photovoltaic module and the maximum chargeable power cannot support enabling of one heating module, and an actual charging power needs to be adjusted).

When time is 10:30, the temperature of the cell of the battery pack 1 is 10°C, the temperature of the cell of the battery pack 2 is 8°C, and the output power of the photovoltaic module is 3000 W. Both the battery pack 1 and the battery pack 2 perform charging (a maximum chargeable power is 2400 W).

When time is 11:00, the temperatures of the cells of the battery pack 1 and the battery pack 2 are both above 12°C, and the output power of the photovoltaic module is 3500 W. Both the battery pack 1 and the battery pack 2 perform charging (a maximum chargeable power is 3700 W).

With reference to Table 1 and Table 2, it can be learned that heating occasions of the battery pack 1 are 7:30 and 8:30 respectively, and heating occasions of the battery pack 2 are 7:30 and 10:00 respectively. The heating occasions of the battery pack 1 are determined according to the following conditions. The output power of the photovoltaic module at 7:30 is greater than a sum of maximum chargeable powers of the battery pack 1 and the battery pack 2 at a temperature in this case (600 W > 0 W + 0 W); and the output power of the photovoltaic module at 8:30 is greater than a sum of maximum chargeable powers of the battery pack 1 and the battery pack 2 at a temperature in this case (1200 W > 550 W + 550 W). The heating occasions of the battery pack 2 are determined according to the following conditions. The output power of the photovoltaic module at 7:30 is greater than a sum of maximum chargeable powers of the battery pack 1 and the battery pack 2 at a temperature in this case (600 W > 0 W + 0 W); and the output power of the photovoltaic module at 10:00 is greater than a sum of maximum chargeable powers of the battery pack 1 and the battery pack 2 at a temperature in this case (2500 W > 1850 W + 550 W).

It should be noted that when the output power of the photovoltaic module cannot support enabling of all heating modules, a power may be obtained from the power grid, to enable all the heating modules. It may be understood that, when the output power of the photovoltaic module cannot enable all the heating modules, only some heating modules may be enabled, and remaining powers may be allocated in some or all battery packs (may be evenly allocated or may be unevenly allocated, which is not limited), so that remaining battery packs perform charging, to improve overall energy storage efficiency of the energy storage system.

A person of ordinary skill in the art may be aware that, in combination with the examples described in embodiments disclosed in this specification, modules and steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system and module, refer to a corresponding process in the foregoing method embodiments. Details are not described herein again.

In several embodiments provided in this application, it should be understood that the disclosed system and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on this understanding, the technical solutions of this application essentially, part contributing to the conventional technology, or some of the technical solutions may be implemented in a form of a software product. A computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An energy storage system, comprising:
a battery pack and a controller, wherein
the battery pack receives electric energy from a photovoltaic module through a direct current bus;
the battery pack comprises a cell pack and a heating module, wherein the heating module is in a one-to-one correspondence with the cell pack;
the controller is configured to compare an output power of the photovoltaic module with a maximum chargeable power of the cell pack in the energy storage system; and
the controller is configured to enable at least one heating module in response to that the output power of the photovoltaic module is greater than the maximum chargeable power of the cell pack in the energy storage system; or
the controller is configured to disable all heating modules in response to that the output power of the photovoltaic module is less than or equal to the maximum chargeable power of the cell pack in the energy storage system.

2. The energy storage system according to claim 1, wherein
the controller is configured to: in response to that the output power of the photovoltaic module is greater than the maximum chargeable power of the cell pack in the energy storage system, use a part of the output power of the photovoltaic module to charge the cell pack in the energy storage system at the maximum chargeable power of the cell pack in the energy storage system, and use a remaining part of the output power of the photovoltaic module to supply power to the heating module; or
the controller is configured to: in response to that the output power of the photovoltaic module is less than or equal to the maximum chargeable power of the cell pack in the energy storage system, use the output power of the photovoltaic module to charge the cell pack in the energy storage system.

3. The energy storage system according to claim 2, wherein
the controller is configured to: in response to that the output power of the photovoltaic module is greater than the maximum chargeable power of the cell pack in the energy storage system, enable, in ascending order of states of charge SOCs of batteries of the battery pack, a heating module corresponding to at least one battery pack.

4. The energy storage system according to claim 3, wherein
the controller is configured to: in response to that the output power of the photovoltaic module is greater than a sum of the maximum chargeable power of the cell pack in the energy storage system and a heating power of the enabled heating module, transfer, to a power grid, a power of the output power of the photovoltaic module except powers for charging the cell pack in the energy storage system and supplying power to the heating module; or
the controller is configured to reduce a voltage of the direct current bus in response to that the output power of the photovoltaic module is greater than a sum of the maximum chargeable power of the cell pack in the energy storage system and a heating power of the enabled heating module.

5. The energy storage system according to any one of claims 2 to 4, wherein
the controller comprises a first controller and a second controller, the battery pack comprises a first battery pack group and a second battery pack group, the first controller controls the first battery pack group, the first battery pack group comprises M battery packs, the second controller controls the second battery pack group, the second battery pack group comprises N battery packs, the first controller is connected to the second controller, and both M and N are positive integers; and
the first controller is configured to: in response to that the output power of the photovoltaic module is greater than the maximum chargeable power of the cell pack in the energy storage system, enable, in ascending order of SOCs of the M battery packs, the heating module corresponding to the at least one battery pack.

6. The energy storage system according to claim 5, wherein
the second controller is configured to: in response to that the output power of the photovoltaic module is greater than a sum of the maximum chargeable power of the cell pack in the energy storage system and heating powers of heating modules corresponding to the M battery packs,
enable, in ascending order of SOCs of the N battery packs, the heating module corresponding to the at least one battery pack.

7. The energy storage system according to any one of claims 2 to 4, wherein
the controller comprises a first controller and a second controller, the battery pack comprises a first battery pack group and a second battery pack group, the first controller controls the first battery pack group, the first battery pack group comprises M battery packs, the second controller controls the second battery pack group, the second battery pack group comprises N battery packs, the first controller is connected to the second controller, and both M and N are positive integers; and
the first controller or the second controller is configured to: in response to that the output power of the photovoltaic module is greater than the maximum chargeable power of the cell pack in the energy storage system,
enable, in ascending order of SOCs of the M battery packs and the N battery packs, the heating module corresponding to the at least one battery pack.

8. The energy storage system according to any one of claims 1 to 7, wherein a charging rate of the cell pack in the energy storage system within a first temperature range is less than a charging rate of the cell pack in the energy storage system within a second temperature range, wherein a lowest temperature in the second temperature range is greater than or equal to a highest temperature in the first temperature range.

9. A temperature control method for an energy storage system, comprising:
comparing an output power of a photovoltaic module with a maximum chargeable power of a cell pack in the energy storage system; and
enabling at least one heating module in response to that the output power of the photovoltaic module is greater than the maximum chargeable power of the cell pack in the energy storage system; or
disabling all heating modules in response to that the output power of the photovoltaic module is less than or equal to the maximum chargeable power of the cell pack in the energy storage system, wherein
the energy storage system further comprises the heating module, and the cell pack is in a one-to-one correspondence with the heating module.

10. The method according to claim 9, wherein the method further comprises:
in response to that the output power of the photovoltaic module is greater than the maximum chargeable power of the cell pack in the energy storage system, using the output power of the photovoltaic module to charge the cell pack in the energy storage system at the maximum chargeable power of the cell pack in the energy storage system and supply power to the heating module; or
in response to that the output power of the photovoltaic module is less than or equal to the maximum chargeable power of the cell pack in the energy storage system, using all the output power of the photovoltaic module to charge the cell pack in the energy storage system.

11. The method according to claim 10, wherein the method further comprises:
in response to that the output power of the photovoltaic module is greater than the maximum chargeable power of the cell pack in the energy storage system, enabling, in ascending order of states of charge SOCs of batteries of the battery pack, a heating module corresponding to at least one battery pack, wherein
the energy storage system further comprises the battery pack, and the battery pack comprises the cell pack and the heating module.

12. The method according to claim 11, wherein the method further comprises:
in response to that the output power of the photovoltaic module is greater than a sum of the maximum chargeable power of the cell pack in the energy storage system and a heating power of the enabled heating module, transferring, to a power grid, a power of the output power of the photovoltaic module except powers for charging the cell pack in the energy storage system and supplying power to the heating module; or
reducing a voltage of a direct current bus in response to that the output power of the photovoltaic module is greater than a sum of the maximum chargeable power of the cell pack in the energy storage system and a heating power of the enabled heating module, wherein
the battery pack receives electric energy from the photovoltaic module through the direct current bus.

13. The method according to claim 11 or 12, wherein the battery pack comprises a first battery pack group and a second battery pack group, the first battery pack group comprises M battery packs, the second battery pack group comprises N battery packs, and both M and N are positive integers; and the method further comprises:
in response to that the output power of the photovoltaic module is greater than the maximum chargeable power of the cell pack in the energy storage system, enabling, in ascending order of SOCs of the M battery packs, the heating module corresponding to the at least one battery pack.

14. The method according to claim 13, wherein the method further comprises:
in response to that the output power of the photovoltaic module is greater than a sum of the maximum chargeable power of the cell pack in the energy storage system and heating powers of heating modules corresponding to the M battery packs, enabling, in ascending order of SOCs of the N battery packs, the heating module corresponding to the at least one battery pack.

15. The method according to claim 11 or 12, wherein the battery pack comprises a first battery pack group and a second battery pack group, the first battery pack group comprises M battery packs, the second battery pack group comprises N battery packs, and both M and N are positive integers; and the method further comprises:
in response to that the output power of the photovoltaic module is greater than the maximum chargeable power of the cell pack in the energy storage system, enabling, in ascending order of SOCs of the M battery packs and the N battery packs, the heating module corresponding to the at least one battery pack.
